# EUROPÄISCHE PATENTANMELDUNG

(11) **EP 2 871 430 A1**
(43) Veröffentlichungstag der Anmeldung: **13.05.2015**
(21) Anmeldenummer: 14185171.7
(22) Anmeldetag: 17.09.2014
(51) Int. Cl.: F25B 15/04, F25B 30/04

(54) **Absorptionswärmepumpe**

(30) Priorität: 07.11.2013 DE 102013222658
(71) Anmelder: ROBERT BOSCH GMBH, 70442 Stuttgart (DE)
(72) Erfinder: Wagner, Verena, 71573 Allmersbach Im Tal (DE); Klosok, Jan, 71336 Waiblingen (DE)

(57) **Zusammenfassung**

Die Erfindung betrifft einen Desorber, ein Steuergerät, ein Verfahren zum Betreiben einer Absorptionswärmepumpe und eine Absorptionswärmepumpe (1) mit einem Kondensator (12), einem Verdampfer (11), einem Absorber (19) und einem Desorber (15), wobei der Desorber (15) vorgesehen ist, um eine Lösung aus einem Kältemittel und einem Lösungsmittel aufzuweisen, wobei der Desorber (15) in Wirkverbindung mit einer Desorberheizung (31) steht, wobei die Desorberheizung (31) ausgebildet ist, um die Lösung im Desorber (15) zu erwärmen, wobei der Kondensator (12) mit einem ersten Wärmekreis (39, 40, 41, 43) gekoppelt ist, um Wärme vom Kondensator (12) aufzunehmen, wobei der Desorber (15) mit einem weiteren Wärmekreis (36, 38, 42, 45) gekoppelt ist, um Wärme vom Desorber (15) aufzunehmen.

## Beschreibung

Die Erfindung betrifft eine Absorptionswärmepumpe gemäß Patentanspruch 1, ein Verfahren zum Betreiben einer Absorptionswärmepumpe gemäß Patentanspruch 7, ein Steuergerät gemäß Anspruch 13 und einen Desorber gemäß Anspruch 14.

### Stand der Technik

Im Stand der Technik sind verschieden Arten von Absorptionswärmepumpen bekannt. Eine Absorptionswärmepumpe weist einen Verdampfer, einen Kondensator, einen Absorber und einen Desorber auf. Flüssiges Kältemittel wird vom Kondensator zum Verdampfer gefördert. Im Verdampfer wird das flüssige Kältemittel durch Aufnahme von Umgebungswärme verdampft. Das dampfförmige Kältemittel wird dem Absorber zugeführt. Im Absorber wird das Kältemittel von einem Lösungsmittel absorbiert und die dabei entstehende Lösung wird einem Desorber zugeführt. Im Desorber wird die Lösung erhitzt, wobei das Kältemittel verdampft. Das dampfförmige Kältemittel wird dem Kondensator zugeführt. Der Kondensator steht in Wirkverbindung mit einem Wärmetauscher, der dem dampfförmigen Kältemittel Wärme entzieht, wobei das Kältemittel wieder verflüssigt wird.

### Offenbarung der Erfindung

Die Aufgabe der Erfindung besteht darin, eine verbesserte Absorptionswärmepumpe und ein verbessertes Verfahren zum Betreiben der Absorptionswärmepumpe bereitzustellen.

Die Aufgabe der Erfindung wird durch die Absorptionswärmepumpe gemäß Patentanspruch 1, das Verfahren zum Betreiben einer Absorptionswärmepumpe gemäß Patentanspruch 7, das Steuergerät gemäß Anspruch 13 und den Desorber gemäß Anspruch 14 gelöst.

Weitere vorteilhafte Ausführungsformen der Erfindung sind in den abhängigen Ansprüchen angegeben.

Ein Vorteil der vorgeschlagenen Absorptionswärmepumpe besteht darin, dass die Absorptionswärmepumpe flexibler einsetzbar ist. Beispielsweise kann durch den verbesserten Absorptionswärmepumpenbetrieb der Betriebsbereich vergrößert werden, da fehlende Umgebungswärme durch zusätzliche Beheizung des Desorbers ausgeglichen werden kann.

Die Absorptionswärmepumpe weist den Vorteil auf, dass sie flexibel eingesetzt werden kann und Wärme zusätzlich oder unabhängig von der verfügbaren Leistung der Umgebungswärmequelle bereitstellen kann. Dazu ist ein Zusatzkreis in Form eines weiteren Wärmekreises vorgesehen, mit dem Wärme aus der Lösung des Desorbers entnommen werden kann. Somit kann zusätzlich zu dem normalen Wärmekreis der Absorptionswärmepumpe Wärme über den weiteren Wärmekreis aus der Lösung des Desorbers entnommen werden. Somit kann bei einer geringen Wärmeaufnahme aus der Umgebung durch eine Desorberheizung die Lösung des Desorbers stärker aufgeheizt werden. Über den weiteren Wärmekreis kann der aufgeheizten Lösung Wärme entnommen und im weiteren Wärmekreis bereitgestellt werden. Somit ist es nicht erforderlich, einen zusätzlichen Wärmeerzeuger vorzusehen. Beispielsweise arbeitet bei einer Luft-Wasser-Wärmepumpe der Absorptionsprozess nur bis zu einer Lufttemperatur von ca. - 20 °C. Unterhalb dieser Lufttemperatur kann die Umgebungsquelle nicht mehr ausreichend Wärme liefern, um genügend Kältemittel zu verdampfen. In diesem Fall wird die Wärme für den weiteren Wärmekreis durch die Desorberheizung bereitgestellt. Somit kann die Absorptionswärmepumpe als Wärmeerzeuger auch eingesetzt werden, obwohl der Absorptionsprozess nicht mehr oder nur in geringem Umfang betrieben werden kann. Somit kann die Absorptionswärmepumpe als alleiniger Wärmeerzeuger auch für tiefe Außentemperaturen wie beispielsweise -40°C verwendet werden.

Abhängig von der gewählten Ausführungsform verwendet der weitere Wärmekreis die Lösung des Desorbers als Wärmemedium. Dadurch wird ein Wärmetauscher eingespart und die Temperatur der Lösung kann genauer erfasst und damit genauer geregelt werden.

In einer weiteren Ausführungsform ist ein Temperatursensor vorgesehen, der die Vorlauftemperatur des ersten Wärmekreises des Heiznetzes erfasst. Damit kann erkannt werden, wann eine Zuschaltung des zweiten Wärmekreises erforderlich ist, damit eine ausreichende Wärmeversorgung sicher gestellt werden kann.

In einer weiteren Ausführungsform ist ein zweiter Temperatursensor vorgesehen, der die Temperatur der Lösung im Desorber erfasst. Somit kann abhängig von der gewünschten Betriebsart die Leistung der Desorberheizung eingestellt werden. Wird die Absorptionswärmepumpe im Absorptionsmodus betrieben, dann kann die Leistung der Desorberheizung so eingestellt werden, dass die Desorption im Desorber stattfindet.

In einer weiteren Anwendung wird die Absorptionswärmepumpe nur als Brennwertgerät ohne Desorptionsprozeß verwendet, wobei die Leistung der Desorberheizung in der Weise geregelt wird, dass die Lösung nur bis zu einer Grenztemperatur erhitzt wird, wobei die Grenztemperatur unter einer Desorptionstemperatur liegt und somit keine oder nur wenig Kältemittel verdampft. Vorzugsweise wird über die Desorberheizung so viel Wärme zugeführt, wie über den weiteren Wärmekreis abgeführt wird.

In einer weiteren Anwendung wird die Absorptionswärmepumpe nur als Brennwertgerät ohne Desorptionsprozeß verwendet werden, wobei der Druck im Desorber so weit erhöht wird, dass trotz hoher Temperatur der Lösung keine Desorption stattfindet. Dazu werden Leitungen geschlossen, mit denen Lösungsmittel oder Kältemittel mit dem Desorber ausgetauscht werden. Insbesondere kann die Leitung zwischen dem Desorber und dem Kondensator verschlossen werden, so dass kein Kältemittel mehr den Desorber verlassen kann. Insbesondere können alle Leitungen, die einen Austausch des Lösungsmittels, des Kältemittels und/oder der Lösung mit dem Absorber ermöglichen, ebenfalls geschlossen werden. Bei diesen Anwendungen wird die Lösung im Desorber nur als Übertragungsmedium für die Wärme von der Desorberheizung zum weiteren Wärmekreis verwendet.

Das Verfahren zum Betreiben der Absorptionswärmepumpe weist den Vorteil auf, dass der Desorber zum Austreiben des Kältemittels und zum Versorgen des Kondensators verwendet werden kann und dass zudem der Desorber als Brennwertkessel zum direkten Versorgen eines weiteren Wärmekreises mit Wärme verwendet werden kann. Dies wird dadurch erreicht, dass der Desorber in zwei Betriebszuständen betrieben wird. In einer ersten Betriebsart wird eine Lösung aus Kältemittel und Lösungsmittel im Desorber aufgeheizt und Kältemittel verdampft. Das gasförmige Kältemittel wird zum Kondensator weiter geleitet, wobei das gasförmige Kältemittel im Kondensator kondensiert und Wärme abgibt. Die Wärme wird vom Kondensator an einen ersten Wärmekreis abgegeben. In einer zweiten Betriebsart wird die Lösung im Desorber erhitzt und der erhitzten Lösung wird Wärme über einen weiteren Wärmekreis entzogen. Somit kann die Absorptionswärmepumpe auch Wärme liefern, obwohl der Kondensator nicht verwendet wird. Zudem kann der Desorber in beiden Betriebsarten betrieben werden.

Die Erfindung wird anhand der Figuren näher erläutert, es zeigen
- Figur 1: eine schematische Darstellung einer Absorptionswärmepumpe,
- Figur 2: eine detaillierte Darstellung einer ersten Ausführungsform des weiteren Wärmekreises, und
- Figur 3: eine detaillierte Darstellung einer zweiten Ausführungsform des weiteren Wärmekreises.

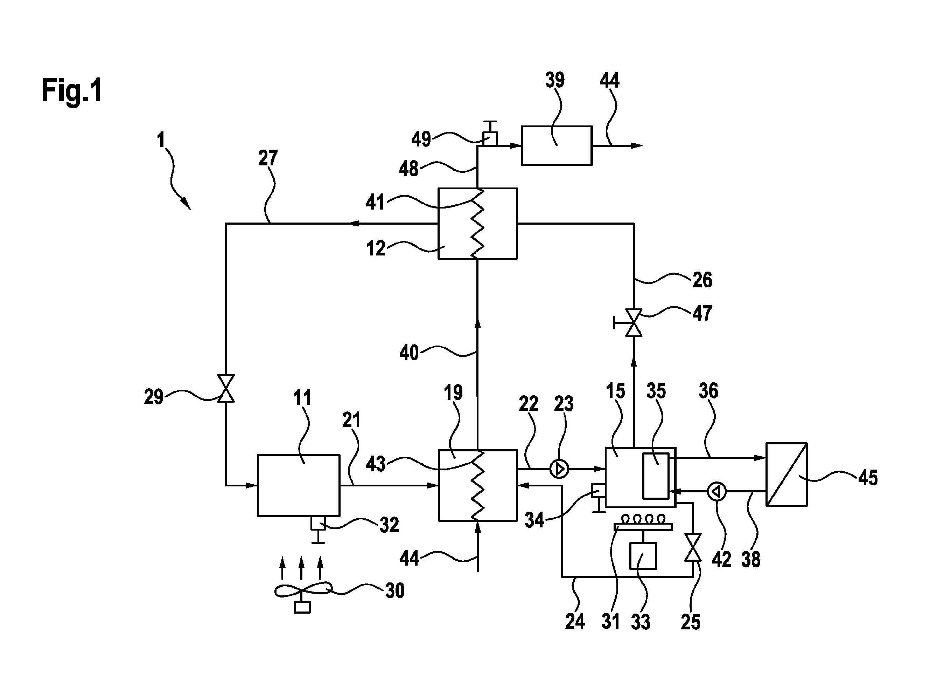

Im Folgenden wird anhand von Figur 1 das Grundprinzip einer Wärmepumpe erläutert. Figur 1 zeigt eine Wärmepumpe 1, die als Absorptionswärmepumpe ausgebildet ist. Die Wärmepumpe 1 weist einen Verdampfer 11 auf, der über eine erste Leitung 21 mit einem Absorber 19 verbunden ist. Der Absorber 19 steht über eine zweite Leitung 22 und über eine Pumpe 23 mit einem Desorber 15 in Verbindung. Der Desorber 15 steht über eine dritte Leitung 24 und eine Drossel 25 mit dem Absorber 19 in Verbindung. Weiterhin ist der Desorber 15 über eine vierte Leitung 26 mit einem Kondensator 12 verbunden. Der Kondensator 12 steht über eine fünfte Leitung 27 mit dem Verdampfer 11 in Verbindung. In der fünften Leitung 27 ist eine zweite Drossel 29 vorgesehen. Weiterhin ist ein Ventilator 30 vorgesehen, der den Verdampfer 11 mit einem Luftstrom zur Aufnahme von Umgebungswärme versorgt. Zudem ist ein erster Temperatursensor 32 im Anströmungsbereich des Verdampfers 11 vorgesehen, der mit einem Steuergerät 33 in Verbindung steht. Der erste Temperatursensor 32 erfasst die Lufttemperatur im Bereich des Verdampfers 11. Auch andere Umgebungswärmequellen sind möglich.

Weiterhin ist eine Desorberheizung 31 in Form eines Brenners, insbesondere in Form eines Gasbrenners vorgesehen, mit dem die Lösung im Desorber 15 aufgeheizt werden kann. Zudem kann abhängig von der gewählten Ausführung ein zweiter Temperatursensor 34 vorgesehen sein, der am Desorber 15 angeordnet ist und die Temperatur der Lösung erfasst. Das Steuergerät 33 steht mit dem Brenner 31 in Verbindung und steuert die Leistung des Brenners 31 in Abhängigkeit von Steuerprogrammen, die in einem Speicher des Steuergerätes 33 abgelegt sind.

Die Wärmepumpe 1 weist einen ersten Wärmekreis auf, der mit einem Heiznetz 39 verbunden ist. Der erste Wärmekreis weist einen zweiten Wärmetauscher 43 auf, der mit dem Absorber 19 gekoppelt ist. Zudem weist der erste Wärmekreis einen dritten Wärmetauscher 41 auf, der mit dem Kondensator 12 gekoppelt ist. Der zweite Wärmetauscher 43 ist über eine achte Leitung 40 mit dem dritten Wärmetauscher 41 verbunden. Der dritte Wärmetauscher 41 ist über eine zehnte Leitung 48 mit dem Heiznetz 39 verbunden. Der zweite und der dritte Wärmetauscher 43,41 werden von einem Wärmemedium durchströmt, das das Heiznetz 39 mit Wärme versorgt. Abhängig von der gewählten Ausführungsform kann auch auf den zweiten Wärmetauscher 43 verzichtet werden. Es ist ein dritter Temperatursensor 49 an der zehnten Leitung 48 vorgesehen, der die Vorlauftemperatur des Wärmemediums am Eingang des Heiznetzes 39 erfasst. Ein Ausgang des Heiznetzes 39 ist über eine neunte Leitung 44 mit dem Eingang des zweiten Wärmetauschers 43 verbunden sein. Das Heiznetz 39 kann einen Heizkörper oder eine Warmwasserversorgung aufweisen.

Der Desorber 15 steht mit einem weiteren Wärmekreis in Verbindung. Der weitere Wärmekreis weist einen ersten Wärmetauscher 35 auf, der mit dem Desorber 15 in Wirkverbindung steht, und der über eine sechste Leitung 36 mit einem Zulauf eines weiteren Wärmetauschers 45 und über eine siebte Leitung 38 mit einem Rücklauf des weiteren Wärmetauschers verbunden ist. In der siebten Leitung 38 und/oder in der sechsten Leitung 36 ist eine zweite Pumpe 42 vorgesehen, die vom Steuergerät 33 angesteuert wird. Der weitere Wärmetauscher 45 kann Teil des Heiznetzes 39 sein.

Die Funktionsweise der Wärmepumpe 1 ist wie folgt: Flüssiges Kältemittel, das beispielsweise Ammoniak darstellt, wird vom Kondensator 12 in flüssiger Form über die fünfte Leitung 27 zum Verdampfer 11 gefördert. Im Verdampfer 11 wird das flüssige Kältemittel durch Aufnahme von Wärme aus der Umgebungsquelle wieder verdampft. Das Steuergerät 33 sorgt dafür, dass dem Verdampfer 11 nur so viel flüssiges Kältemittel zugeführt wird, wie der Verdampfer 11 gerade bei der herrschenden Quellentemperatur verdampfen kann. Dazu sind entsprechende Kennwerte und Kennlinien im Speicher des Steuergerätes 33 in Abhängigkeit von der Quellentemperatur abgelegt.

Das aus dem Verdampfer 11 kommende Kältemittel wird im Absorber 19 von einem Lösungsmittel, z.B. Wasser absorbiert. Anschließend wird das mit Kältemittel angereicherte Lösungsmittel, d.h. die Lösung dem Desorber 15 mittels der Pumpe 23 zugeführt. Im Desorber 15 wird die Lösung durch den Brenner 31 so hoch erhitzt, dass das Kältemittel mit hohem Druck und hoher Temperatur sich vom Lösungsmittel trennt und dem Kondensator 12 zugeführt wird. Das Lösungsmittel wird über die dritte Leitung 24 und die Drossel 25 zum Absorber 19 zurückgeführt.

Durch die Anordnung des weiteren Wärmekreises kann der Desorber 15 ohne Verwendung des Desorptionsprozesses als reiner Brennwertkessel betrieben werden. Dazu wird beispielsweise mithilfe des Brenners 31 die Lösung im Desorber 15 so weit aufgeheizt, dass gerade keine oder nur eine geringe Phasentrennung zwischen Kältemittel und Lösungsmittel erreicht wird. Die über den Brenner 31 in die Lösung eingebrachte Wärme wird durch eine Aktivierung der zweiten Pumpe 42 entweder über den ersten Wärmetauscher 35 oder direkt über die Lösung und einen weiteren Wärmetauscher 45 dem Desorber 15 wieder entzogen.

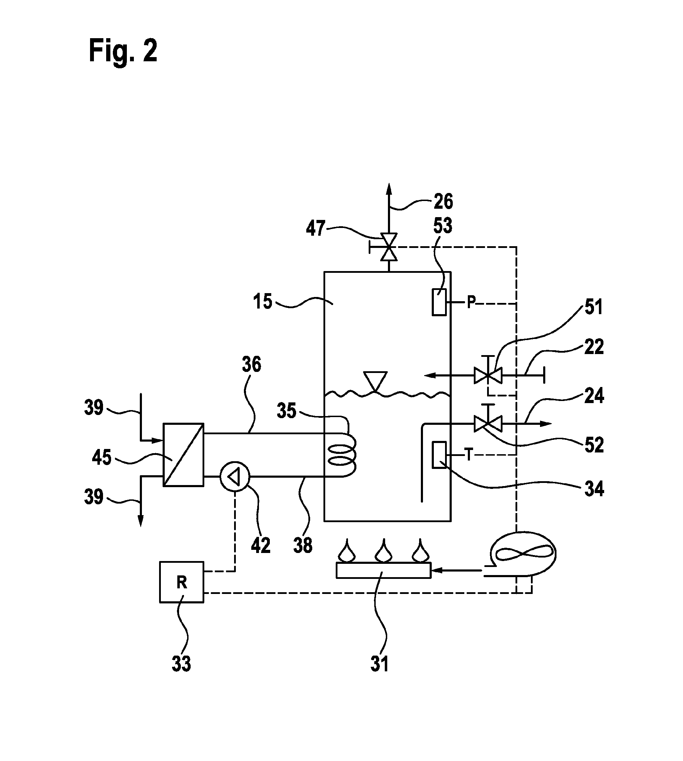

Figur 2 zeigt in einer vergrößerten Darstellung den weiteren Wärmekreis der Figur 1. Es ist ein Drucksensor 53 vorgesehen, der den Druck im Desorber 15 erfasst und an das Steuergerät 33 weiterleitet. Der weitere Wärmetauscher 45 ist an das Heiznetz 39 angeschlossen. Somit kann das Heiznetz 39 mit Wärme versorgt werden, ohne den Desorptionsprozess des Desorbers 15 zu verwenden. Wird die zweite Pumpe 42 nicht aktiviert, d.h. der weitere Wärmekreis nicht verwendet, so wird die Wärmepumpe 1 als normale Absorptionswärmepumpe betrieben.

In der dargestellten Ausführung weist die vierte Leitung 26 ein Absperrventil 47 auf, das vom Steuergerät 33 ansteuerbar ist. Zudem sind in der zweiten Leitung 22 ein zweites Absperrventil 51 und in der dritten Leitung 24 ein drittes Absperrventil 52 angeordnet. Soll die Wärmepumpe 1 nur mit dem weiteren Wärmekreis betrieben werden, so schließt das Steuergerät 33 das Absperrventil 47, das zweite Absperrventil 51 und das dritte Absperrventil 52. Insbesondere werden alle Leitungen geschlossen, mit denen ein Austausch von Lösungsmittel, Kältemittel oder Lösung mit dem Desorber möglich ist. Damit kann kein Kältemittel und keine Lösung mehr den Desorber 15 verlassen. Somit kann das Steuergerät 33 mithilfe des Brenners 31 die Lösung auf eine höhere Temperatur als die Grenztemperatur erhitzen, ohne dass Wärme über das Kältemittel an den Kondensator abgegeben wird.

Somit kann die Anlage zur Versorgung des Heiznetzes 39 verwendet werden, auch wenn die von der Umgebung an den Verdampfer gelieferte Wärme nicht für ein Betreiben des Desorptionsprozesses ausreicht. Dazu kann im Steuergerät 33 ein entsprechendes Programm abgelegt sein, das in Abhängigkeit von dem Unterschreiten einer vorgegebenen Grenztemperatur der Vorlauftemperatur in der zehnten Leitung 48 zum einen die Leistung des Brenners 31 erhöht und zum anderen die zweite Pumpe 42 aktiviert, d.h. den weiteren Wärmekreis aktiviert. Überschreitet die Vorlauftemperatur den Grenzwert, so wird der weitere Wärmekreis wieder abgeschaltet, indem beispielsweise die Pumpe 42 abgeschaltet wird.

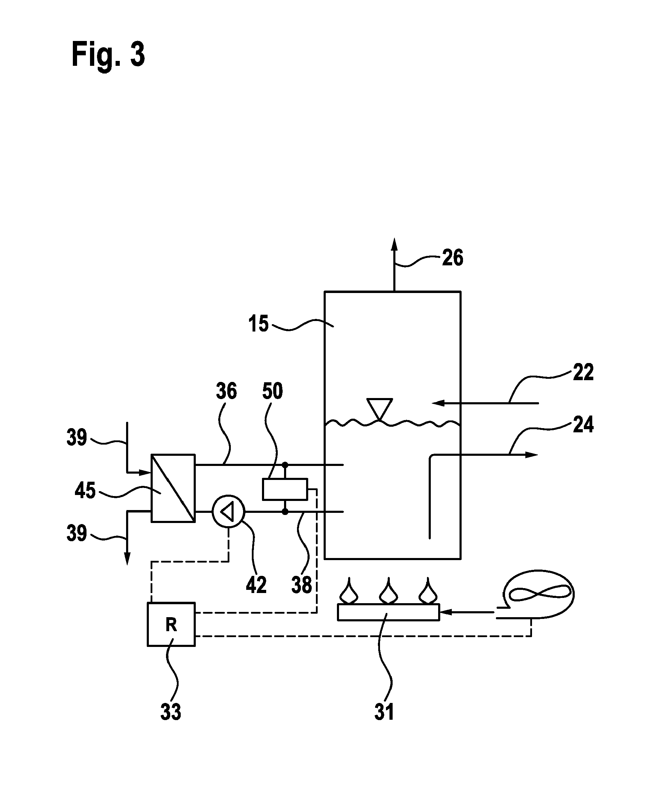

Figur 3 zeigt eine Ausführungsform des weiteren Wärmekreises, bei der auf den ersten Wärmetauscher 35 verzichtet wurde und die Lösung das Trägermedium für den weiteren Wärmetauscher 45 darstellt. In dieser Ausführungsform münden die sechste und siebte Leitung 36,38 direkt in den Desorber 15. Zudem sind keine Absperrventile 47,51,52 vorgesehen oder die Absperrventile 47,51,52 sind geöffnet. Weiterhin ist ein Wärmemengenzähler 50 an den Leitungen 36,38 vorgesehen, mit dem die über den weiteren Heizkreis aus dem Desorber 15 abgeführte Wärmemenge erfasst wird.

Bei einer Ausführungsform stellt das Steuergerät 33 bei einem aktivierten zweiten Wärmekreis abhängig von der Temperatur der Lösung im Desorber 15 die Leistung des Brenners 31 in der Weise ein, dass eine vorgegebene Grenztemperatur der Lösung nicht überschritten wird. Bei der Grenztemperatur findet noch keine oder nur eine geringe Phasentrennung zwischen dem Kältemittel und dem Lösungsmittel statt. Somit ist es nicht erforderlich, das bzw. die Absperrventile 47, 51, 52 zu schließen. Die von dem Brenner 31 in die Lösung des Desorbers 15 übertragene Wärme wird mithilfe des weiteren Wärmekreises 36, 38, 42, 45 komplett oder in Teilen der Lösung wieder entnommen.

Bei einer weiteren Ausführungsform stellt das Steuergerät 33 bei einem aktivierten zweiten Wärmekreis abhängig von der mithilfe des Wärmemengenzählers 50 erfassten abgeführten Wärmemenge die Leistung des Brenners 31 in der Weise ein, dass genau soviel Wärmemenge der Lösung über den Brenner 31 zugeführt wird, wie über den weiteren Wärmekreis, insbesondere dem weiteren Wärmetauscher 45 abgeführt wird.

Somit können die beschriebenen Wärmepumpen beispielsweise auch bei Temperaturen der Umgebungsluft betrieben werden, die unter -20°C liegen. Dadurch kann die Anlage als alleiniger Wärmeerzeuger auch bis -40°C der Außenlufttemperatur verwendet werden. Abhängig von der gewählten Ausführungsform kann auch eine Kombination der Betriebsphasen gewählt werden, d.h. die Anlage kann als Absorptionswärmepumpe betrieben werden, wobei zudem dem Desorber 15 über den dritten Wärmetauscher 41 Wärme entzogen und zum Heiznetz 39 übertragen wird.

Für den Verdampfer 11 können verschiedene Umgebungswärmequellen wie z.B. Luft, Sole oder Wasser zur Aufnahme von Wärme verwendet werden. In dem dargestellten Ausführungsbeispiel ist ein Ventilator vorgesehen, der Luft als Wärmequelle zum Verdampfer 11 strömen lässt. Wie bereits ausgeführt, können auch andere Umgebungswärmequellen wie z.B. Sole oder Bodenwärme zur Versorgung des Verdampfers 11 mit Wärme verwendet werden.

Abhängig von der gewählten Ausführungsform kann auch eine Kombination der Ausführungsformen der Figur 2 und 3 vorgesehen sein.

## Patentansprüche

1. Absorptionswärmepumpe (1) mit einem Kondensator (12), einem Verdampfer (11), einem Absorber (19) und einem Desorber (15), wobei der Desorber (15) vorgesehen ist, um eine Lösung aus einem Kältemittel und einem Lösungsmittel aufzuweisen, wobei der Desorber (15) in Wirkverbindung mit einer Desorberheizung (31) steht, wobei die Desorberheizung (31) ausgebildet ist, um die Lösung im Desorber (15) zu erwärmen, wobei der Kondensator (12) mit einem ersten Wärmekreis (39, 40, 41, 43) gekoppelt ist, um Wärme vom Kondensator (12) aufzunehmen, wobei der Desorber (15) mit einem weiteren Wärmekreis (36, 38, 42, 45) gekoppelt ist, um Wärme vom Desorber (15) aufzunehmen.

2. Absorptionswärmepumpe nach Anspruch 1, wobei der weitere Wärmekreis (36, 38, 45, 42) einen Wärmetauscher (35) aufweist, der in Wirkverbindung mit dem Desorber (15) steht.

3. Absorptionswärmepumpe nach Anspruch 1, wobei im weiteren Wärmekreis (36, 38, 42, 45) die Lösung des Desorbers (15) als Übertragungsmedium fließt.

4. Absorptionswärmepumpe nach einem der vorhergehenden Ansprüche, wobei ein Temperatursensor (49) vorgesehen ist, der eine Vorlauftemperatur des ersten Wärmekreises (39, 40, 41, 43) erfasst, wobei der Temperatursensor (49) mit einer Steuereinheit (33) verbunden ist, wobei die Steuereinheit (33) ausgebildet ist, um abhängig von der Vorlauftemperatur den weiteren Wärmekreis (36, 38, 42, 45) zu betreiben, insbesondere eine Pumpe (42) des weiteren Wärmekreises (35, 36, 38, 45) zu aktivieren.

5. Absorptionswärmepumpe nach einem der vorhergehenden Ansprüche, wobei ein zweiter Temperatursensor (34) vorgesehen ist, der eine Temperatur der Lösung im Desorber (15) erfasst, wobei der zweite Temperatursensor (34) mit einer Steuereinheit (33) verbunden ist, wobei die Steuereinheit (33) ausgebildet ist, um abhängig von der Temperatur der Lösung eine Leistung der Desorberheizung (31) in der Weise zu beeinflussen, dass die Lösung eine vorgegebene Grenztemperatur, bei der eine Desorption des Kältemittels stattfindet, nicht überschreitet.

6. Absorptionswärmepumpe nach einem der vorhergehenden Ansprüche, wobei der Desorber (15) über eine Leitung (26) mit dem Kondensator (12) verbunden ist, wobei die Leitung (26) vorgesehen ist, um dampfförmiges Kältemittel vom Desorber (15) zum Kondensator (12) zu führen, wobei in der Leitung (26) ein Absperrventil (47) vorgesehen ist, wobei das Absperrventil (47) mit dem Steuergerät (33) verbunden ist, wobei das Steuergerät (33) ausgebildet ist, um beim Betreiben des weiteren Wärmekreises (36, 38, 42, 45) das Absperrventil (47) zu schließen, wobei bei geschlossener Absperrvorrichtung (47) eine Druckerhöhung im Desorber (15) möglich ist, wodurch höhere Temperaturen der Lösung möglich sind, bei denen noch keine Desorption stattfindet.

7. Verfahren zum Betreiben einer Absorptionswärmepumpe (1) mit einem Kondensator (12), einem Verdampfer (11), einem Absorber (19) und einem Desorber (15), wobei der Desorber (15) in Wirkverbindung mit einer Desorberheizung (31) steht, wobei sich im Desorber (15) eine Lösung aus einem Kältemittel und einem Lösungsmittel befindet, wobei die Lösung im Desorber (15) mithilfe der Desorberheizung (31) erhitzt wird, und wobei über einen Wärmekreis (36, 38, 42, 45) der Lösung Wärme entzogen wird.

8. Verfahren nach Anspruch 7, wobei über einen Desorptionsprozess der Lösung Wärme entzogen wird.

9. Verfahren nach Anspruch 7 oder 8, wobei über die Desorberheizung (31) so viel Wärme der Lösung zugeführt wird, wie über den Wärmekreis (36, 38, 42, 45) der Lösung entzogen wird.

10. Verfahren nach einem der Ansprüche 7 bis 9, wobei der Kondensator (12) mit einem ersten Wärmekreis (39, 40, 41, 43) in Wirkverbindung steht, wobei eine Vorlauftemperatur des ersten Wärmekreises (39, 40, 41, 43) erfasst wird, wobei die erfasste Vorlauftemperatur mit einem Grenzwert verglichen wird, wobei der Wärmekreis (36, 38, 42, 45) aktiviert wird und Wärme der Lösung des Desorbers (15) entzogen wird, und die Desorberheizung (31) auf eine höhere Leistung angepasst wird, wenn die erfasste Vorlauftemperatur unter den Grenzwert sinkt.

11. Verfahren nach einem der Ansprüche 7 bis 10, wobei eine Temperatur der Lösung im Desorber (15) erfasst wird, und wobei abhängig von der Temperatur der Lösung und dem Druck im Desorber (15) eine Leistung der Desorberheizung (31) in der Weise beeinflusst wird, dass die Lösung bis zu einer Grenztemperatur erwärmt wird, bei der keine oder wenigstens keine wesentliche Verdampfung des Kältemittels im Desorber (15) auftritt.

12. Verfahren nach einem der Ansprüche 7 bis 11, wobei Leitungen (22, 24, 26) geschlossen werden, mit denen Lösungsmittel oder Kältemittel mit dem Desorber (15) ausgetauscht werden, wenn der Wärmekreis (36, 38, 42, 45) aktiviert wird.

13. Steuergerät (33) zum Steuern einer Absorptionswärmepumpe (1), wobei das Steuergerät (33) ausgebildet ist, um ein Verfahren nach einem der Ansprüche 7 bis 12 auszuführen.

14. Desorber (15) für eine Absorptionswärmepumpe (1) nach einem der Ansprüche 1 bis 6, wobei der Desorber (15) ausgebildet ist, um mit einem Wärmekreis (36, 38, 42, 45) gekoppelt zu werden, um Wärme direkt vom Desorber (15) aufzunehmen.

15. Desorber nach Anspruch 14, wobei der Desorber (15) einen Anschluss für eine Leitung (36, 38) eines Wärmekreises (45) aufweist oder einen Wärmetauscher (35) des Wärmekreises (35, 36, 38, 42, 45) aufweist.
